(19) **Europäisches Patentamt / European Patent Office / Office européen des brevets**

(11) **EP 1 881 329 A2**

(12) # EUROPEAN PATENT APPLICATION

(43) Date of publication:
**23.01.2008 Bulletin 2008/04**

(51) Int Cl.:
*G01N 35/00* (2006.01)     *G06F 9/50* (2006.01)
*G06Q 10/00* (2006.01)     *G06Q 10/00* (2006.01)

(21) Application number: **07252867.2**

(22) Date of filing: **19.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **20.07.2006 US 832191 P**
**31.05.2007 US 756364**

(71) Applicant: **ORTHO-CLINICAL DIAGNOSTICS, INC.**
**Rochester, New York 14626 (US)**

(72) Inventors:
• **Barnes, Lawrence**
  **Honeoye Falls, NY 14472 (US)**
• **Denton, Gary**
  **Honeoye Falls, NY 14472 (US)**
• **Hauer, Steven**
  **Pittsford, NY 14534 (US)**

(74) Representative: **Mercer, Christopher Paul et al**
**Carpmaels & Ransford**
**43-45 Bloomsbury Square**
**London WC1A 2RA (GB)**

(54) **Method for scheduling samples in a combinational clinical analyzer**

(57)     A method for scheduling the order of analysis of multiple samples in a combinational clinical analyzer performing a plurality of different analytical tests, includes the steps of: loading multiple samples in random order into a combinational clinical analyzer; defining the test requirements of the multiple samples; transferring said test requirements to a flexible scheduling algorithm; and generating a schedule specifying the start times of each required test for each of said multiple samples that minimizes or maximizes a predefined objective function. In a preferred embodiment, the objective function is the makespan or weighted makespan.

**Description**

**FIELD OF THE INVENTION**

The invention relates generally to the minimization of the elapsed time required to process a set of input samples in a combinational clinical analyzer and, more particularly, to a method that defines test requirements of input samples, transfers these requirements to a scheduling algorithm, and generates an assay processing schedule that achieves maximum sample or volume throughput capacity irrespective of patient sample input order or the mixture of assays required to be performed on the various samples while maintaining minimal elapsed time to first result and minimal turn around time.

**BACKGROUND OF THE INVENTION**

In so-called combinational clinical analyzers, a plurality of dry chemistry systems and wet chemistry systems, for example, can be provided within a contained housing. Alternatively, a plurality of wet chemistry systems can be provided within a contained housing or a plurality of dry chemistry systems can be provided within a contained housing. Furthermore, like systems, e.g., wet chemistry systems or dry chemistry systems, can be integrated such that one system can use the resources of another system should it prove to be an operational advantage.

Each of the above chemistry systems is unique in terms of its operation. For example, known "dry" chemistry systems typically include a sample supply that includes a number of dry slide elements, a metering/transport mechanism, and an incubator having a plurality of test read stations. A quantity of sample is aspirated into a metering tip using a proboscis or probe carried by a movable metering truck along a transport rail. A quantity of sample from the tip then is metered (dispensed) onto a dry slide element that is loaded into the incubator. The slide element is incubated, and a measurement such as optical or other reads are taken for detecting the presence or concentration of an analyte. Note that for "dry" chemistry systems the addition of a reagent to the input patient sample is not required.

A "wet" chemistry system, on the other hand, utilizes a reaction vessel such as a cuvette, into which quantities of patient sample, at least one reagent fluid, and/or other fluids are combined for conducting an assay. The assay also is incubated and tests are conducted for analyte detection. The "wet" chemistry system also includes a metering mechanism to transport patient sample fluid from the sample supply to the reaction vessel.

The combinational clinical analyzers by having both "dry" and "wet" chemistry systems are capable of performing a wide variety of tests related to a patient diagnosis, but are furthermore challenged by the need to produce these assays quickly. An important factor in maintaining high operational performance of a combinational clinical analyzer is the ability to rapidly process a plurality of patient samples through a variety of different sample treatments and measurement steps. If space and cost were not factors, it would be a first matter of having large rooms full of individual analyzers each operated and serviced by a dedicated lab technician. However, that situation is not feasible, and it is necessary to consider alternative methods and the operational characteristics associated with high performance. Both volume throughput and time to first result are important. Volume throughput relates to how much time is required for all tests on all samples to be completed, e.g., the ability to process 100 patient tests in an hour. First time to result relates to how fast a specific assay test result can be delivered on startup, e.g., the time between sample input and the measurement of the amount of sodium in the sample took 15 seconds. Closely related to first time to result is turn around time. Turn around time is the elapsed time between the time of input of a sample and time of result for the sample during normal operation. Sometimes these measures of performance interact to produce unsatisfactory results, e.g., in the latter situation above, if you input twenty samples, it may be several minutes before the reportable result of the first test is available, but the analyzer operates at the fully rated volume throughput of 100 test per hour; however, if samples are input one at a time, the volume throughput of the analyzer maybe reduced to only 50 patient tests per hour.

There have been many proposed methods to speed up the operation of clinical analyzers, and all of them fall short of achieving satisfactory performance level.

US-A-5,087,423 discloses a plurality of analyzing modules, a plurality of analyzing routes, and at least one bypass route bypassing at least one analyzing module. Each analyzing module is capable of analyzing samples with respect to one or more items, and samples successively supplied from the introduction sides of the modules are selectively delivered into each module in accordance with the possible analyzing items of each module and the analyzing items of the samples to be analyzed. The sample cup can pass the module via a bypass or can be returned to the introduction side of the module via a bypass; in accordance with the items to be analyzed, the effective distribution of the sample cups can be performed. The key productivity improvement of this invention is the use of multiple analyzing routes.

US-A-5,380,488 discloses a container feeding system which includes a feed stocker for stocking racks holding containers, one or more sampling feeders connected to the downstream side of the feed stocker, and one or more analyzers for withdrawing samples from containers which are moved to sampling positions in an interlocked relation to the sampling feeder or feeders. One or more coupling feeders are connected to the respective downstream sides of the sampling feeder or feeders, and a treated container stocker is connected to the most downstream side of the coupling feeder or feeders. The individual components are provided as respective units. The number of sampling feeders and coupling feeders connected thereto can be increased or reduced, and in correspondence therewith so can the number of analyzers disposed along a rack feeding line. The rack-feeding path can be readily increased and reduced, as desired, to meet the scale of the delivery side. Likewise, the control mechanism for controlling the feeding of containers with selective priority is also greatly simplified. The key productivity improvement of this invention is the use of both multiple analyzing routes and multiple, duplicate analyzers.

US-A-5,434,083 uses a rotating reaction vessel train in which an analysis time of each of the test items is set to correspond to the number of times of circulation (number of cycles) of the reaction vessels on the reaction line. A reaction vessel renew device is selectively controlled for each reaction vessel in accordance with the number of cycles. Thus, a test item which requires a short reaction time is processed in a smaller number of cycles of the reaction line, and a test item which requires a long reaction time is processed in a larger number of cycles. The analyzer can process sequentially a plurality of test items which require different reaction times for one sample. The key productivity improvement of this invention is the ability to simultaneously process samples requiring differing amounts of time for analysis.

US-A-5,482,861 operates an automated continuous and random access analytical system capable of simultaneously effecting multiple assays of a plurality of liquid samples wherein scheduling of various assays of the plurality of liquid samples is followed by creating a unit dose and separately transferring a first liquid sample and reagents to a reaction vessel without initiation of an assay reaction sequence, followed by physical transfer of the unit dose disposable to a processing workstation, whereby a mixture of the unit dose disposable reagents and sample is achieved during incubation. The key productivity improvement of this invention is the capability to both continuously and randomly access input samples while being able to perform a number of different assays.

US-A-5,575,976 discloses an analyzer that operates in a synchronized manner in which each assay resource has a predetermined fixed operation window within the fixed processing cycle. As a result, the control for one assay resource can rely on predetermined timing of other dependent and independent assay resources. Therefore, analyte tests having variable protocols and that are processed by moving reaction vessels in different chronologies can be interleaved if their assay resource requirements do not conflict, i.e., analyte tests with shorter processing time can be entered after those with longer processing times and the shorter analyte test can finish first. This can be achieved because the means of transporting reaction vessels containing assay constituents can present reaction vessels to the necessary assay resources in whatever order is required, regardless of entry order. The key productivity improvement of this invention is the utilization of shared resources for assays having differing processing times.

US-A-5,576,215 operates a biological analyzer wherein instrument systems used to perform assays of the biological samples loaded into the analyzer are operated in accordance with a schedule developed by a scheduler routine. The scheduler routine determines interval periods between operations performed by the analyzer instrument systems on each biological sample as a function of an entered load list unless a fixed interval period between the operations is required and schedules instrument system operations and the determined interval periods. The biological system analyzer performs assays of the biological samples by operating the analyzer instrument systems in accordance with the developed schedule. The key productivity improvement of this invention is the use of an independently derived scheduler that produces a feasible, but does not attempt to obtain an optimal, schedule.

US-A-5,646,049 discloses apparatus and method for simultaneously performing at least two assays using certain reagents for a plurality of liquid samples on a continuous analytical system. The method comprises the steps of combining an aliquot of each liquid sample with at least one reagent in a first reaction container to form a first assay reaction for each liquid sample and combining an aliquot of each liquid sample with at least one of the other reagents in a second reaction container to form a second assay reaction for each liquid sample. The method further comprises the steps of incubating the assay reactions of each assay being conducted at least one time, performing other activities associated with each assay, and using the first and second assay reactions to complete each assay, including analyzing the incubated assay reactions. The method finally comprises the step of scheduling the steps of combining, incubating, and performing other activities associated with each of the assays according to a predetermined protocol. The key productivity improvement of this invention is the ability to process multiple samples at the same time based upon a predetermined protocol.

US-A-5,679,309 discloses a method for controlling an analyzer including a rotatable, circular reaction carousel which has circumferentially spaced cuvettes. Each cuvette, according to the menu of the analyzer, is designated to receive a selected reagent and a selected sample for reaction and analysis and, post-analysis, be washed for re-use. A drive indexes the reaction carousel to position the cuvettes according to the menu and in proper sequence for receipt of reagent, sample, and for wash and for analysis. When photometric analysis is used, the drive operates on a sequence of a spin cycle, during which the reaction carousel is spun for photometric analysis of reacting cuvettes, and a park cycle, for a period of time for insertion of reactant, sample, and/or for wash. The key productivity improvement of this invention is the sequential, systematic processing of input samples.

US-A-5,846,491 increases throughput by employing an analyzer control system with means for allocating assay resources to one of a number of reaction vessels as a function of the time cycle for that vessel and transferring reaction vessels directly from one assay resource station to another according to a chronology selected from a plurality of different predetermined chronologies. The key productivity improvement of this invention is the use of a set of predefined chronology to effect a schedule.

US-A-5,902,549 discloses a plurality of analyzer units for serum, a plurality of analyzer units for blood plasma, and a plurality of analyzer units for urine arranged along a main transfer line for transferring a sample rack from a rack providing portion to a rack storage portion. A reagent bottle for inspecting liver function is contained in each reagent delivery mechanism of two analyzer units among the plurality of analyzer units for serum. When the reagent for inspecting liver function in one of the two analyzer units is to be short, analysis for the liver function analysis item in the samples can be continued by transferring a sample rack from the rack-providing portion to the other analyzer unit. The key productivity improvement of this invention is the use of a plurality of analyzers capable of performing the same assay.

US-A-5,966,309 discloses an automated apparatus for subjecting samples to one or more selected test procedures at one or more test stations comprising a conveyor line for transporting samples contained in uniquely labeled containers, said line having at least two lanes for routing said containers to one or more selectable test stations, at least one of said lanes being a transport lane and at least one of said lanes being a queue lane, and having a container interface device for transferring containers to said testing device from the queue lane and back again onto said queue lane. The key productivity improvement of this invention is the use of equivalently multiple queues.

US-A-5,972,295 discloses an automatic analyzer comprising a rack supply unit capable of containing sample racks, an analyzing unit for testing an instructed analysis item to a sample sampled from a sample container contained in the sample rack, a transfer line for transferring a sample rack supplied from the rack supply unit to a position corresponding to the analyzing unit and transferring the sample rack after being sampled to an exit of the transfer line, a standby unit for keeping sample racks having a probability of being reexamined stand-by, a returning line for returning the sample rack after being sampled to an entrance side of the transfer line, and a rack collecting unit for containing sample racks not required to be reexamined. The key productivity improvement of this invention is the use of an intermediate rack to allow the flexible handing of samples.

US-A-5,985,672 addresses the need for high-speed processing by employing a pre-processor for use in performing immunoassays on samples for analytes in the sample employing concentrically positioned incubating and processing carousels. A single transfer station permits reaction vessels containing sample and reagents to be moved between the carousels. The samples are separated, washed, and mixed on the processing carousel and incubated on the incubating carousel thus speeding up processing throughput. The key productivity improvement of this invention is the use of separate circular carousels coupled with a transfer station enabling sample movement between.

US-A-6,019,945 discloses a transfer mechanism for transferring a sample container holder between a conveyor line and a sampling area formed in each of several analyzers, the transfer mechanism being connectable to each one of the plurality of analyzers. At least two analyzer units are different from one another in either the types of reagent supply means, the number of analysis items that can be analyzed, the number of tests that can be processed in a unit time, or the species of samples to be processed, and wherein the at least two analysis units described above have the same attachment mechanism or the same shape thereof with respect to the conveyor line. The key productivity improvement of this invention is the use of a transfer mechanism to enable the movement of samples from an input conveyer line to multiple analyzers.

US-A-6,022,746 discloses a method for operating a multi-analyzer system by generating a list of tests to be performed by the system within a given reaction vessel. The list of tests is sorted according to the number of reaction vessels used in performing each test to be performed by the system in a given time period. A duplication percentage for the tests is determined and is compared with the sorted list of tests. Resources associated with the tests are duplicated across at least two analyzers based on the comparison of the duplication percentage with the sorted list of tests in a matter that at least one of the tests is performed by at least two of the analyzers. The key productivity improvement of this invention is the use of a generated list of tests to allocate analysis resources to tests.

Another scheduling method used in automated analyzers does not use a fixed cycle, instead using a scheduling method referred to as "kitting." US-A-6,096,561 discloses an automated continuous and random access analytical system, capable of simultaneously effecting multiple assays of a plurality of liquid samples wherein various assays are scheduled for a plurality of liquid samples. Through kitting, the system is capable of creating a unit dose by separately transferring liquid sample and reagents to a reaction vessel without initiation of an assay reaction sequence. From the kitting means, multiple, kitted unit dose disposables are transferred to a process area, where an aliquot is mixed for each independent sample with one or more liquid reagents at different times in a reaction vessel to form independent reaction mixtures. Independent scheduling of kitting and mixing is achieved during incubation of the multiple reaction mixtures, simultaneously and independently. The system is capable of performing more than one scheduled assay in any order in which a plurality of scheduled assays is presented. The incubated reaction mixtures are analyzed independently and individually by at least two assay procedures that are previously scheduled. The key productivity improvement of this invention is enabled by the requirement that the operator pre-select the order of sample input to gain operational efficiency in terms of sample throughput.

US-A-6,117,392 discloses an automatic analyzing apparatus having a rack supply unit capable of containing sample racks, an analyzing unit for testing a sample sampled from a sample container contained in the sample rack, a transfer line for transferring a sample rack supplied from the rack supply unit to a position corresponding to the analyzing unit and transferring the sample rack after being sampled to an exit of the transfer line, a standby unit for keeping sample racks having a probability of being reexamined standing-by, a returning line for returning the sample rack after being sampled to an entrance side of the transfer line, and a rack collecting unit for containing sample racks not required to be reexamined. The key productivity improvement of this invention is the use of a sample rack to facilitate the movement of input samples to analyzer units.

US-A-6,261,521 discloses a sample analysis system having a plurality of analysis units placed along a main conveyor line prior to its analysis operation. The system setup includes setup of analysis units in combination with different types of reagent supply units, setup of analysis routes as to whether it is a stationary type or an automatic type, and setup of analysis items for each analysis unit as to which analysis item should be assigned to which analysis unit having which reagent supply type. The key productivity improvement of this invention is the use of multiple analyzer units connected by a main conveyer line.

US-A-7,015,042 discloses a clinical analyzer where incoming samples are partitioned into groups in accord with the length of time required for the assay to be completed or in accord with the pattern of reagent addition(s) taken with length of time required for the assay to be completed. Medium length time assays are completed, removed from a reaction carousel, and replaced by shorter length time assays during a single operational cycle in which longer length assays also are completed. The key productivity improvement of this invention is the manual partitioning of incoming samples into like groups.

US-A-7,101,715 discloses a dual analyzer system comprising at least two analyzers where samples to be tested are partitioned into three groups in accord with the frequency the test assays are requested. One analyzer performs a portion of the most frequently requested menu assays and all of a first subgroup of less frequently requested assays. The second analyzer performs a similar portion of the most frequently requested menu assays and all of a second subgroup of less frequently requested assays. The first of the analyzers is not equipped to perform any of the second subgroup of assays, and the second analyzer is not equipped to perform any of the second subgroup of assays. The key productivity improvement of this invention is the use of multiple analyzers in the situation where the manual partitioning of incoming samples into like groups is performed.

US 2003/0040117 discloses a clinical analyzer where incoming samples are partitioned into groups in accord with the length of time required for the assay to be completed or in accord with the pattern of reagent addition(s) taken with length of time required for the assay to be completed. Medium length time assays are completed, removed from a reaction carousel, and replaced by shorter length time assays during a single operational cycle in which longer length assays also are completed. The key productivity improvement of this invention is the manual partitioning of incoming samples into like groups based upon analyzer completion time requirements.

US 2003/054557 discloses a clinical analyzer where incoming samples are partitioned into groups in accord with the length of time required for the assay to be completed or in accord with the pattern of reagent addition(s) taken with length of time required for the assay to be completed. Medium length time assays are completed, removed from a reaction carousel, and replaced by shorter length time assays during a single operational cycle in which longer length assays also are completed. The key productivity improvement of this invention is the manual partitioning of incoming samples into like groups based upon analyzer completion time requirements.

US 2004/0053414 discloses a dual analyzer system comprising at least two analyzers where samples to be tested are partitioned into three groups in accord with the frequency the test assays are requested. One analyzer performs a portion of the most frequently requested menu assays and all of a first subgroup of less frequently requested assays. The second analyzer performs a similar portion of the most frequently requested menu assays and all of a second subgroup of less frequently requested assays. The first of the analyzers is not equipped to perform any of the second subgroup of assays and the second analyzer is not equipped to perform any of the second subgroup of assays. The key productivity improvement of this invention is the use of multiple analyzers in the situation where the manual partitioning of incoming samples into like groups is performed.

US 2005/0220670 discloses a multipath incubator that enables an immunoassay analyzer to perform tests that are not conducted serially relative to when the test samples entered the analyzer. The key productivity improvement of this invention is the use of random sample access that enables the required samples and tests to be assigned to more than one incubator path.

US 2005/0227360 discloses a method for maximizing analyzer throughput irregardless of the mix in demand of different assays to be conducted by duplicating the reagents required to conduct selected assays in at least two separate reagent servers and also enabling newly incoming selected assays to be conducted using reagents from whichever reagent server has the smaller backlog of such high-volume assays. The key productivity improvement of this invention is the use of multiple and duplicate reagent supplies.

WO 2004/074847 discloses a method and apparatus for scheduling. The apparatus applies tests to microscope slides, where the slides are loaded in trays. Each tray is treated as a batch, and batches may be interleaved to reduce the total running time of testing all slides in up to three batches. The batches of slides have protocols that define the application of reagents such as primary antibodies. The protocols define open times, where no common resources are used, and use times, where common resources are used. The scheduler operates to ensure that the use times between batches do not overlap, without leaving the next step in the protocol for an excessive period. The key productivity improvement of this invention is the use of a scheduler that ensures a feasible schedule; however, there is no attempt to optimize sample throughput.

WO 2005/006831 discloses a random access reagent container handling system using a reagent container shuttle to move reagent containers between a loading tray and at least one linear reagent container tray and at least one circular reagent carousel. The reagent container tray is positioned as needed beneath the reagent container shuttle by a reagent tray shuttle. The key productivity improvement of this invention is the use of a random access reagent container.

WO 2005/008217 discloses an automatic clinical analyzer in which the number of cuvette ports available for reaction vessels on a reaction carousel is 50% in a configuration using a single reagent storage area; in a second configuration, an additional reagent storage area is employed, and additional ones of the cuvette ports on reaction carousel are utilized, thereby significantly increasing throughput. The key productivity improvement of this invention is the use of an additional reagent storage area coupled with increased utilization of cuvette ports on the reaction carousel.

Existing technology, as described above, uses a number of diverse equipment configurations and scheduling methodologies in an attempt to speed up the operation of clinical analyzers. This ad hoc technology consists of multiple sample paths, sample path modifications, procedures to process multiple samples at one time, equipment to process more than one type of analysis at any given time, employing the operator to input samples in a specific order to insure fast sample throughput, among others. However, no systematic method has been put forth to automatically optimize, relative to a specific objective function, the operation of a combinational clinical analyzer.

## SUMMARY OF THE INVENTION

Accordingly, one object of the present invention to provide a method for operating a combinational clinical analyzer to automatically schedule, without manual intervention by the operator, incoming patient samples and associated tests in a manner that optimizes a selectable objective function of operational performance while providing minimal turnaround time for individual samples and tests or assays.

One aspect of the invention is directed to a method for minimizing sample testing time in a clinical analyzer performing a plurality of different analytical tests, comprising the steps of: defining the test requirements of one or more input samples; transferring said test requirements to a flexible schedule algorithm; and generating a schedule specifying the start times of each required test for each of said input samples that minimizes or maximizes a pre-defined objective function.

Another aspect of the invention provides a method for scheduling the order of analysis of multiple samples in a combinational clinical analyzer performing a plurality of different analytical tests, including the steps of: loading multiple samples in random order into a combinational clinical analyzer; defining the test requirements of the multiple samples; transferring said test requirements to a flexible scheduling algorithm; and generating a schedule specifying the start times of each required test for each of said multiple samples that minimizes or maximizes a predefined objective function. In a preferred embodiment, the objective function is the makespan or weighted makespan.

Yet another aspect of the invention provides a method for scheduling the order of analysis of multiple samples in a combinational clinical analyzer performing a plurality of different analytical tests, including the steps of: loading multiple samples in random order into a combinational clinical analyzer; defining the test requirements of the multiple samples; transferring said test requirements to a flexible scheduling algorithm; and generating a schedule specifying the start times of each required test for each of said multiple samples that minimizes or maximizes a predefined objective function; loading additional multiple samples in random order into the analyzer; defining the test requirements of the additional multiple samples; appending the test requirements of the additional multiple samples to the test requirements of the multiple samples already in the analyzer producing updated an updated schedule specifying the start times of each required test for each of the multiple samples and additional multiple samples that minimizes or maximizes a predefined objective function.

Still another aspect of the invention provides a method of determining the presence or amount of different analytes in multiple samples in a combinational clinical analyzer, including the steps of: providing a method of scheduling multiple samples as described above; dispensing samples on receiving elements in the order determined by the scheduling method; optionally providing one or more reagents; incubating the receiving elements; and taking measurement of the samples to determine the presence or amount of the different analytes in each of the multiple samples. In a preferred embodiment, the receiving elements are one or more of a dry slide element, an optically transparent cuvette,

or a streptavidin coated microwell.

Yet another aspect of the invention provides a method of determining the presence or amount of different analytes in multiple samples in a combinational clinical analyzer, including the steps of: providing a method of scheduling multiple samples and additional multiple samples as described above; dispensing samples on receiving elements in the order determined by the scheduling method; optionally providing one or more reagents; incubating the receiving elements; and taking measurement of the samples to determine the presence or amount of the different analytes in each of the samples. In a preferred embodiment, the receiving elements are one or more of a dry slide element, an optically transparent cuvette, or a streptavidin coated microwell.

Yet another aspect of the invention provides a combinational clinical analyzer set up to operate according to any one of the methods according to the previous aspects of the present invention.

Further objects, features and advantages of the present invention will be apparent to those skilled in the art from detailed consideration of the preferred embodiments that follow.

## BRIEF DESCRIPTION OF THE DRAWINGS

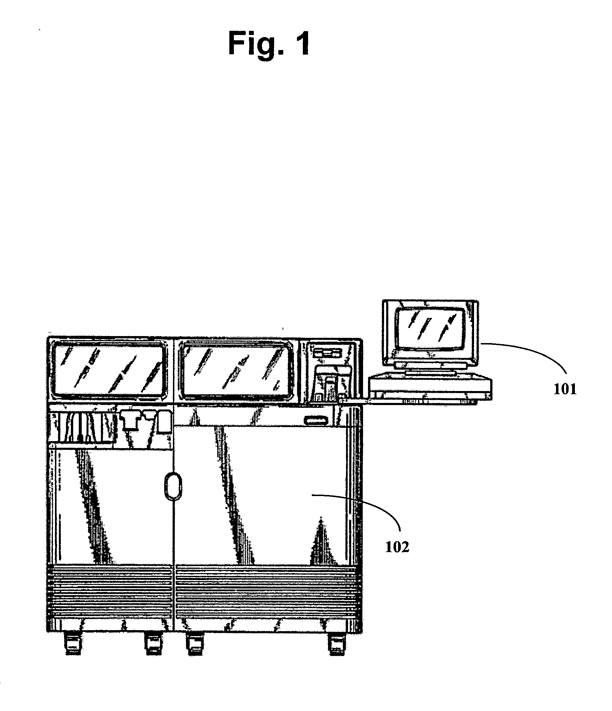

FIG. 1 is a diagram of the external interface of a combinational clinical analyzer showing the outer skin 102 and the computer console interface 101.

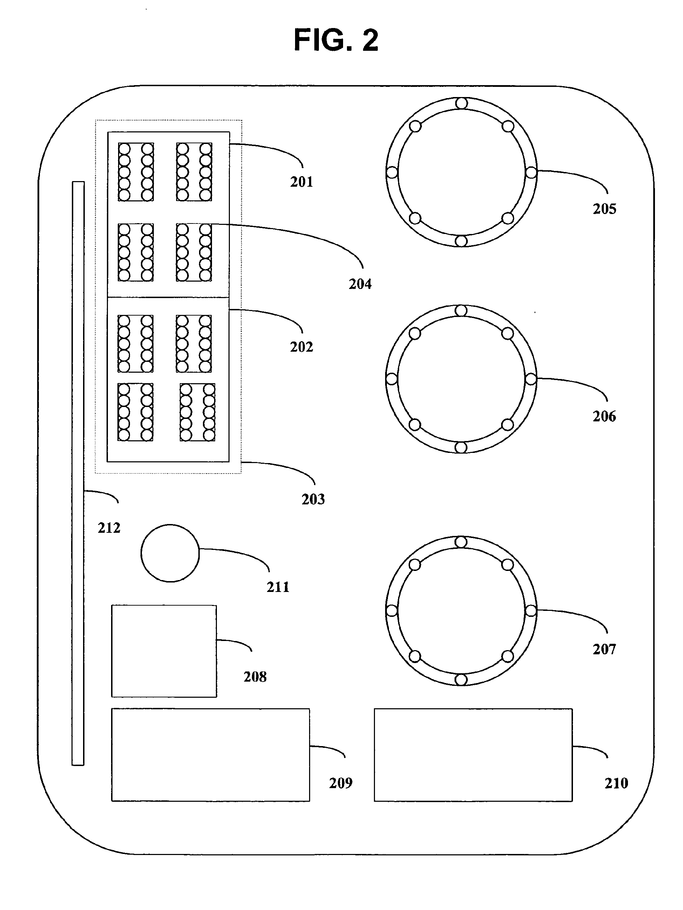

FIG. 2 is a diagram of the internal plan of the combinational clinical analyzer showing the layout of key components which includes the sample area 203, which has been sub-divided into load/unload zone 201 and a metering zone 202, two wet chemistry zones 205 and 206, a dry chemistry zone 207, two reagent delivery subsystems 209 and 210, disposable components area 208, aliquot buffer 211, and a rail holding two robotic metering arms 212, one for samples and one for reagents.

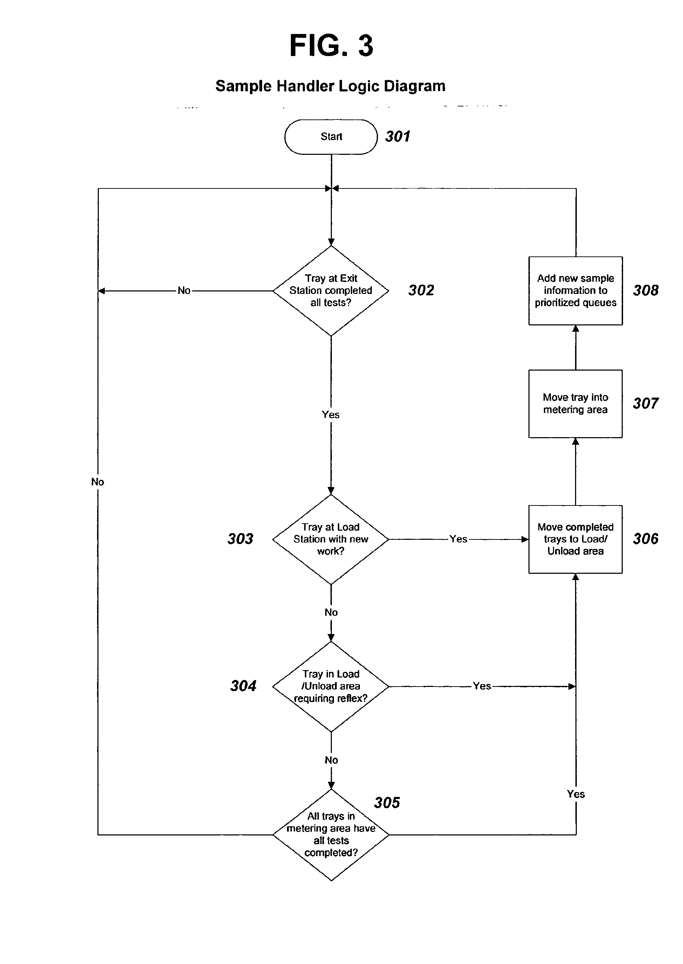

FIG. 3 is a diagram of the logic associated with the sample tray loading and unloading. The processing begins at the START ellipse 301 and first checks at 302 to see if the most advanced tray (at the Exit Station) has had all required samples taken. If NO, then the checking of the above condition continues until all required samples have been taken. Then the logic checks at 303 to see if there is a tray at the Load Station with new work. If YES, then at 306, the tray at the Exit Station is removed and at 307, the tray at the Load Station is entered and at 308, information about the required tests associated with the newly entered samples is added to the prioritized queues. If there is no tray in the Load Station, then at 304 a check is made as to whether or not there are samples in Load/Unload area requiring a reflex test where a reflex test is automatically generated because of the quantitative result of another test associated with the -same sample. If there exists an outstanding reflex test, then at 306, the tray in the Exit station is removed and at 307, the tray requiring the reflex test is entered and at 308, information about the required tests associated with the newly entered samples is added to the prioritized queues. If there are no pending reflex tests for trays in the Load/Unload area and there are still trays in the metering area requiring work, then at 305, the checking continues.

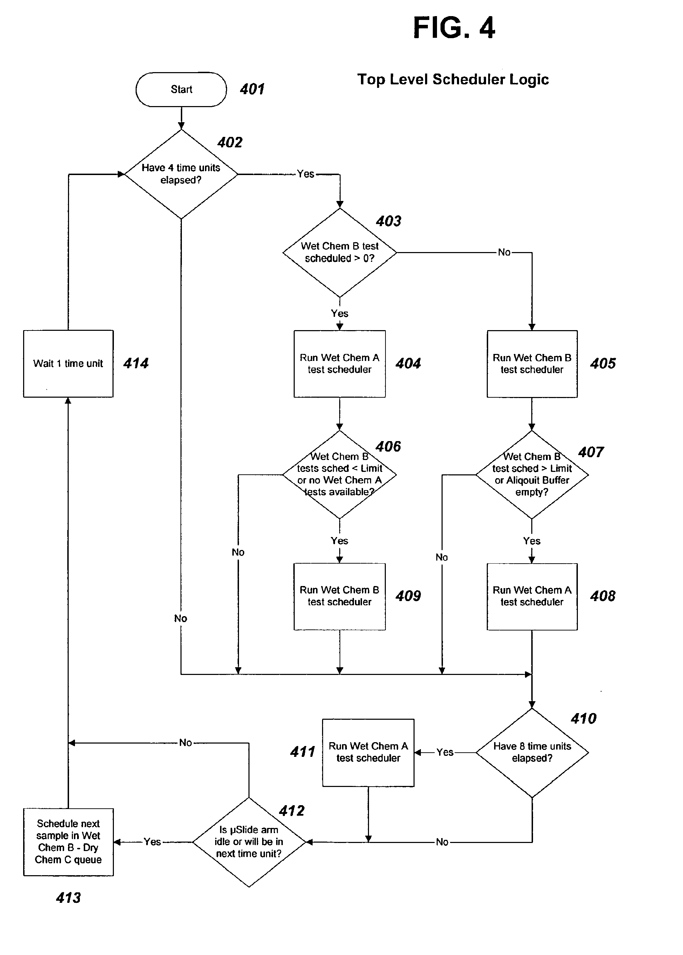

FIG. 4 is a diagram of the logic associated with a top-level first heuristic scheduler logic. The processing begins at the START ellipse 401 and first checks at 402 to see if 4 time units have elapsed since the last check. If YES, at 403, a check is made to see if any Wet Chemistry B tests are scheduled. If Yes, then at 404 the Wet Chemistry A test scheduler is executed. If No, at 405 the Wet Chemistry B test scheduler is executed. Assuming the 404 branch was taken, after execution of the Wet Chemistry A test scheduler, at 406 a check is made to see if the number of Wet Chemistry B tests is less than the number of tests limit or whether no Wet Chemistry A tests are available. If YES, then the Wet Chemistry B test scheduler is executed. If NO, then at 410 a check is made to see if 8 time units have elapsed. Assuming the 405 branch was taken, after execution of the Wet Chemistry B test scheduler, at 407 a check is made to see if the number of Wet Chemistry A tests is greater than the number of tests limit or whether the aliquot buffer is empty. If YES, then the Wet Chemistry A test scheduler is executed. If NO, then at 410 a check is made to see if 8 time units have elapsed. If 8 time units have elapsed, then at 411 the Wet Chemistry A test scheduler is executed otherwise at 412 a check is made as to whether the Dry Chemistry C thin film slide element arm is idle or will be in the next time unit. If YES, then all tests associated with the next sample in the Wet Chemistry B / Dry Chemistry A queue is scheduled and a 1 time unit wait is imposed. Otherwise, only the 1 time unit wait is imposed.

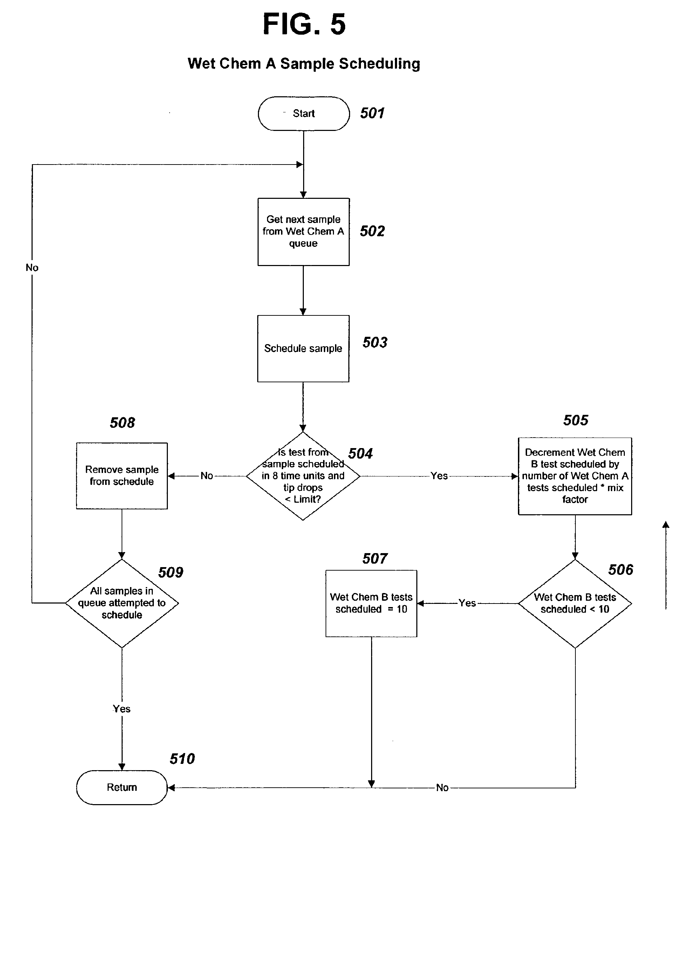

FIG. 5 is a diagram of the logic associated with the Wet Chemistry A test scheduler. The processing begins at the START ellipse 501 and at 502 the scheduler first obtains the information on the next sample from the Wet Chemistry A queue and subsequently at 503 schedules the sample. Next, at 504, the scheduler checks to see if the scheduled sample is from the current set of samples scheduled in 8 time units and also if the number of tip drops to be used is less than the limit. If YES, then at 505 the Wet Chemistry B tests scheduled is reduced by the number of Wet Chemistry A tests scheduled times the mix factor, where the mix factor is the ratio of the number of Wet Chemistry A tests to be scheduled to the number of Wet Chemistry B tests to be scheduled visible over the number of samples in the sample horizon. The mix factor is a number that is updated whenever the above defined ratio changes. If NO, at 508 the sample is removed from the schedule. Assuming the 505 branch was taken, at 506 a check is made to see if the number of Wet Chemistry B tests scheduled is less than 10. If YES, the scheduler then reduces the number of Wet Chemistry B tests to 10, otherwise RETURN at 510. Assuming the 508 branch was taken, at 509 the scheduler checks to see if all samples in the Wet Chemistry A queue have had a scheduling attempt. If YES, then RETURN at 510. Otherwise, get next sample from Wet Chemistry A queue at 502.

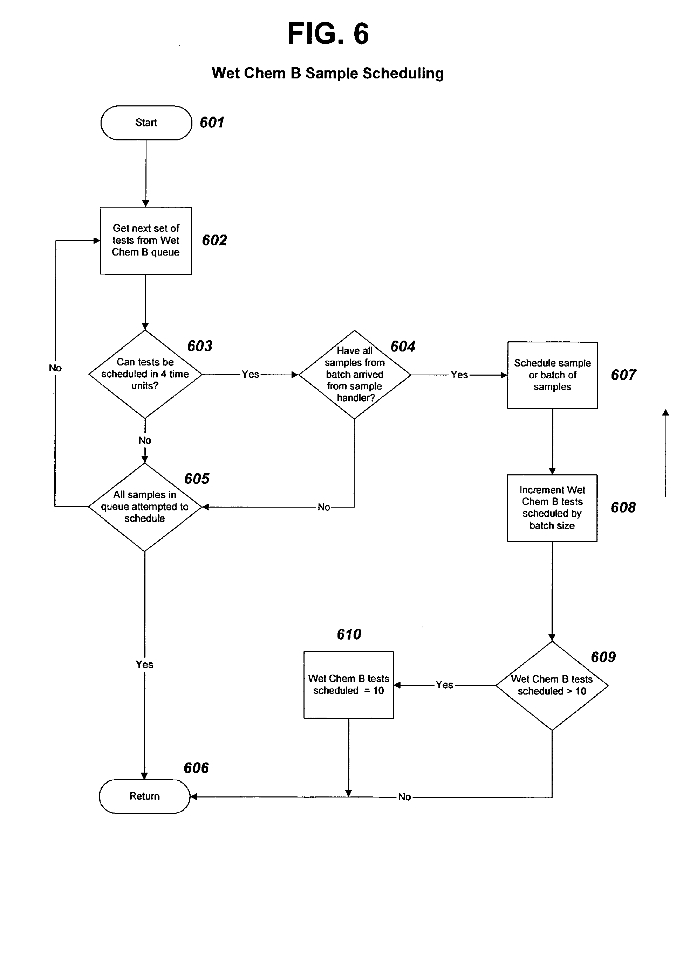

FIG. 6 is a diagram of the logic associated with the Wet Chemistry B queue sample scheduling. The processing begins at the START ellipse 601 and at 602 the scheduler first obtains the information on the next set of tests from the Wet Chemistry B queue. At 603, a check is made to see if the above tests can be scheduled in 4 time units. If NO, then at 605 a check is made to see if an attempt to schedule has been performed on all samples in the Wet Chemistry B queue, and if NO, then at 602 the information on the next set of tests from the Wet Chemistry B queue is obtained. Otherwise, RETURN at 606. Assuming the 603 response was NO, a check is made at 604 to see if all samples from current batch have arrived from sample handler. IF NO, then the above check at 605 is performed. If YES, then at 607 a sample or batch of samples is scheduled, at 608 the number of Wet Chemistry B tests scheduled is incremented by the batch size, and at 609 a check is made to see if the number of Wet Chemistry B tests scheduled is greater than 10. If YES, then at 610 reduce the number of scheduled Wet Chemistry B tests to 10 and RETURN at 606. Otherwise, RETURN at 606. The same scheduling logic is used to schedule Dry Chemistry C tests.

## DETAILED DESCRIPTION OF PREFERRED EMBODIMENTS

The present invention enables the operator of a combinational clinical analyzer to input samples in any order, without regard to the type or quantity of tests (i.e., assays) required of the samples, and not affect the operational performance of the device, i.e., the clinical analyzer will be able to process tests at its fully rated sample or volume throughput capacity without impacting the time to first result or the turnaround time associated with individual samples. For example, the present invention would allow an operator to input a set of patient samples, such as plasma, serum, whole blood, etc., that requires a very long time to complete for certain specific tests and then afterwards submit a series of samples requiring significantly less time to complete using other resources. The analyzer would evaluate the test requirements of the two sets as a whole and determine the schedule that minimizes the elapsed time to complete all analysis on all samples, generally referred to as the makespan, thereby maintaining the maximum possible sample throughput. A system of queues and priorities is used to make sure that the time to first result and associated turnaround time is not impacted for critical tests.

The benefits of the present invention are enhanced by the synergistic effects of two-dimensional random access to the input samples in that unlike some other clinical analyzers there is no requirement to process samples in sequential input order. Additionally, like systems, e.g., wet chemistry systems or dry chemistry systems, have the potential to share resources to maintain high operational efficiency. Such systems typically include a supply of consumables including thin-film slides, reaction vessels (cuvettes or streptavidin coated microwells), etc., a plurality of sensiometric or measuring devices including electrometers, reflectometers, luminescence, light transmissivity, photon detection, and the like for measuring specific aspects of the sample, incubator(s) for heating the samples, a supply of reagents, and a plurality of reagent delivery subsystems, all of which can be accessed and used at any time. Furthermore, the analyzer has an aliquot buffer which is a device capable of temporarily holding samples to enable re-testing or to allow sample trays, where the vast majority of required tests have been completed, to be removed from the metering zone thereby allowing a new tray of samples to be transferred into the metering area from the load/unloading area.

For a general understanding of the present invention, reference is made to the drawings. In the drawings, like reference numerals have been used to designate identical elements. In describing the present invention, the following term(s) have been used in the description.

The term "data" refers herein to physical signals that indicate or include information. When an item of data can indicate one of a number of possible alternatives, the item of data has one of a number of "values." For example, a binary item of data, also referred to as a "bit," has one of two values, interchangeably referred to as "1" and "0" or "ON" and "OFF" or "high" and "low." An N-bit item of data has one of $2^N$ values. A "multi-bit" item of data is an item of data that includes more than one bit.

The term "data" includes data existing in any physical form, and includes data that are transitory or are being stored or transmitted. For example, data could exist in the form of a one-dimensional or two-dimensional bar code that is subsequently scanned by a laser and optically converted to electronic or other transmitted signals, or as signals stored in electronic, magnetic, or other form.

To "obtain" or "produce" or "determine" an item of data is to perform any combination of operations that begins without the item of data and that results in the item of data. An item of data can be "obtained" or "produced" or "determined" by any operations that result in the item of data. An item of data can be "obtained from" or "produced from" or "determined from" other items of data by operations that obtain or produce the item of data using the other items of data.

An operation or event "transfers" an item of data from a first component to a second if the result of the operation or event is that an item of data in the second component is the same as an item of data that was in the first component prior to the operation or event. The first component "provides" the data, and the second component "receives" or "obtains" the data. Frequently various computer languages use the construct of a software subroutine or function call with parameters to achieve the data transfer.

An "operand" is an item of data on which an operation is performed.

An operation is performed "using an operand" when the operation is performed on the operand.

An "arithmetic operation" is an operation that obtains a numerical result that depends upon the value of an operand. Addition, subtraction, multiplication, and division are examples of arithmetic operations.

The term "sample horizon" refers to the number of input patient samples being considered by the scheduling algorithm. This number can vary from one to the maximum number of input patient samples possible.

A "feasible" schedule is a schedule that specifies a set of start times for each test such that no system constraints are violated and the schedule can be implemented operationally without error.

An "infeasible" schedule is a schedule that specifies a set of start times for each test, but at least one system constraint is violated and the schedule cannot be implemented operationally without error.

An "objective function" is a weighted linear combination of costs or resources, e.g., dollars or time, respectively, that when evaluated produces a number indicative of the relative "goodness" of a particular solution to a problem. Principally, the value of an objective function is either minimized, e.g., minimum time, or maximized, e.g., maximum revenue. If the solution to the problem produces either a desired minimum or maximum then the solution is said to be optimal.

An "optimal" schedule is a feasible schedule that specifies a set of start times for each test such that an objective function is maximized or minimized. For example, a specific objective function is one that computes the elapsed time from the start of the first test to the end of the last test. This specific objective function usually is minimized. Usually optimal schedules are generated using mathematical programming techniques such as linear programming, zero-one programming, dynamic programming, or variations thereof. These specific techniques are defined in Harvey M. Wagner, Principles of Operations Research, 2nd Edition, Prentice-Hall, 1975.

A "sub-optimal" schedule is a feasible schedule that specifies a set of start times for each test in an attempt to optimize a specific objective function but does not guarantee achieving the minimum or maximum of the specific objective function. Usually sub-optimal schedules are the result of applying a heuristic optimizing method.

A "heuristic optimizing method" is an algorithm that satisfactorily works in many situations.

To access samples at "random" means that samples may be accessed in any order within the metering zone.

The ability to access samples "sequentially" means that samples may be accessed only in a predefined order within the metering zone. Often "sequential" access means that samples may be accessed only in time input order.

By "combinational" it is meant that the analyzer includes at least two chemistry systems that can encompass any combination of "dry" and/or "wet" chemistry systems. In brief and in a typical "dry" chemistry system, a patient sample and/or other fluids are aspirated from a fluid supply and deposited onto a dry slide or receiving element such as those described in U.S. Pat. No. 3,992,158 to Przybylowicz et al. The dry slide or receiving element is incubated and the amount or presence of at least one analyte in the sample metered onto the element is determined, such as through use of an electrometer, reflectometer, or other suitable testing device. In one variation of a "wet" chemistry system, e.g., the Wet Chemistry A tests referenced herein, a patient sample is aspirated from a fluid supply and deposited into a chemically coated e.g., streptavidin microwell or similar receiving element. A reagent is aspirated and added to the sample in the microwell, the resulting mixture is incubated, and subsequently washed. Additional sequences of reagent addition, incubation, and washing are performed until finally a signal reagent is added followed by incubation and measurement of the test result based upon chemiluminescence. In another variation of a "wet" chemistry system, e.g., the Wet Chemistry B tests referenced herein, a patient sample is aspirated from a fluid supply and deposited into an uncoated cuvette or similar receiving element. A reagent is aspirated and added to the sample in the cuvette and the resulting mixture is incubated. Additional sequences of reagent addition and incubations may be performed until a measurement of the test result is made based upon color change or other changes which affect optical transmission through the cuvette.

The "volume throughput capacity" of a clinical analyzer is defined as the total number of tasks that the clinical analyzer can complete in a stated unit of time. For example, a combinational clinical analyzer might have a "volume throughput capacity" of 100 tests per hour under certain specific conditions.

A clinical analyzer is said to operate at its "fully rated" volume throughput capacity when the incoming mix of samples and associated tests are in the appropriate proportions such that the absolute maximum number of tests are completed in the shortest possible time. This is a situation rarely achieved during operation of the analyzer.

The normal "operational performance" of a clinical analyzer is the average number of tests that can be complete per unit time when the incoming mix of samples and tests are in proportions reflective of ordinary hospital operations. This number is always lower than the 'fully rated" volume throughput capacity of the analyzer.

The "time to first result" is defined as the elapsed time between when the clinical analyzer's power is first switched on and when the first unit of completed work (i.e., result of analysis of the first sample) is available. During this time the analyzer must warm up, perform all calibrations, and make sure that all aspects of the machine are ready for operation. Only then can the analyzer accept samples and start generating test results.

The process of defining the "test requirements" associated with a sample or series of samples is composed of determining which tests on specific individual samples are to be performed, what priority is to assigned to each test, and what resources, including processing time, are required to complete specific tests. For example, a specific sample may require three Wet Chemistry A tests, four Wet Chemistry B tests, and two Dry Chemistry C tests. In particular, the tests could be:

    1. Wet Chemistry A

        a. Testosterone

        b. FSH

        c. Prolactin

    2. Wet Chemistry B

        a. Alkaline Phosphatase
        b. Phenobarbital
        c. Urine Protein
        d. Lactate

    3. Dry Chemistry C

        a. Glucose

        b. Potassium.

Adding a compilation of the individual test's priority and other factors, such as time required to complete a specific test and the number of disposable metering tips available over the sample horizon, required for each of the above tests would complete the test requirements. Some of these requirements are system constraints that are inherent in the clinical analyzer system.

The "turnaround time" for a test or series of tests associated with a sample processed by a clinical analyzer is defined as the elapsed time from time from when a sample is input to the clinical analyzer to the time that the results are available for the test or series of tests during normal operation of the analyzer, i.e., a non-startup situation.

The "makespan" of a set of tests on a group of samples is defined as the elapsed time between input of the group of samples into the clinical analyzer and when the value for the last test on the last sample is reported. If the set of test finish times (starting at time 0) on a group of samples is denoted by a vector f = {$f_1$, $f_2$, $f_3$, ... ,$f_n$} where n is defined as the total number of tests required, then the makespan is defined to be the maximum element of f, or max(f). Alternatively, the makespan can be calculated by:

$$makespan = f_1 + \sum_{i=2}^{i=n}\left(f_i - f_{i-1}\right)$$

If some time intervals comprising the makespan are more important than others, then it is possible to weight the time intervals in the above equation to obtain a more favorable schedule. The weights can be imposed as follows:

$$weighted \quad makespan = a_1 f_1 + \sum_{i=2}^{i=n} a_i(f_i - f_{i-1})$$

where the weights, $a_i$, are constrained as follows:

$$\sum_{i=1}^{i=n} a_i = 1$$

A "wet" chemistry system for purposes of the description that follows includes a reaction vessel which receives predetermined volumetric quantities of sample, reagent, and other fluids which are appropriately metered into the reaction vessel in order to perform an assay(s). The assay is incubated as the fluids are added to the assay(s) and specific analysis is performed, such as through luminescence detectors, light transmissivity detectors, photon detection, and the like using suitable measuring apparatus.

The analyzer that is described herein is a combinational clinical analyzer having a plurality of "dry" chemistry systems and a plurality of "wet" chemistry systems. It will be understood from the discussion that follows, however, that several variations and modifications are possible which embody the essential concepts of the present invention. For example, the analyzer can include a pair of "dry" chemistry systems and a pair of "wet" chemistry systems. Furthermore, like systems, e.g., "wet" chemistry systems or "dry" chemistry systems, can be integrated such that one system can use the resources of another system should it prove to be an operational advantage.

Referring now to FIG. 1, the external interface 102 of a combinational clinical analyzer is shown. Housed within is a Dry Chemistry system (thin-film slide tests), a Wet Chemistry system A (immunoassay tests), and a Wet Chemistry system B (cuvette-based tests) where the two "wet" chemistry systems perform different categories of analytical tests. Additionally, this figure shows the attached computer 101 that provides the computational resources to compute schedules as well as an external interface to provide means for the operator to input and uniquely identify patient samples. A network interface to hospital patient information system is present but not shown. Furthermore, the operator uses this interface to specify or obtain from the hospital's patient information system the battery of tests to be performed on each sample and to integrate patient and sample information residing in the hospital patient information system, if required. Although an operator may interface with the analyzer to input information, in other embodiments, the analyzer is able to automatically obtain sample and testing information from a database either in the analyzer on-board computer or remotely, such that no operator intervention is necessary. FIG. 2 is a diagram of the internal layout of the key components of the combinational analyzer. The sample area 203 is divided into two regions, the metering zone 202, and the operator load/unloading zone 201. Contained within each zone is up to four sample trays 204 capable of holding up to ten individual samples. There are three chemistry zones, two wet chemistry zones 205 and 206, and a dry chemistry zone 207 that incubate and take measurements on the treated samples. Additionally, there are two reagent delivery subsystems 209 and 210, a consumable supply area 208, and an aliquot buffer facility 211. Two robotic arms are contained in rack 212, both having the capability to aspirate and meter samples by random access from any point in the metering zone to any one of the three chemistry zones, and also to aspirate and meter reagents by random access from any of the reagent supplies to any one of the three chemistry zones. Further details can be found in copending application entitled "Fluid Metering in a Metering Zone" (Attorney Docket No. CDS 5042) filed concurrently herewith.

The present invention provides a method to define an optimal schedule of operation for the combinational clinical analyzer based upon the number and type of tests required to be performed on each sample, the sample horizon, and the automated inner working of the analyzer. In particular, the individual sample test requirements are known and may be transferred automatically to the memory of the scheduling computer through the console computer interface via the hospital's patient information network interface or manually by operator intervention. In addition, the sample horizon is a number that can vary between 1 and k, where k = 62 in this example, which is the maximum number of input patient samples to be considered by the scheduler; in certain cases the value of the sample horizon may be pre-determined or in other cases determined in real time by operational circumstances or parameters. Furthermore, the amount of time required to perform each test is fixed by the inner working of the analyzer; in the simplest case, it takes $\alpha$ seconds to perform the Wet Chemistry test A, $\beta$ seconds to perform the Wet Chemistry test B, and $\gamma$ seconds to perform the Dry Chemistry test C. Normally, if $\alpha$ is smaller than either $\beta$ or $\gamma$, then $(\beta/\alpha)$ is an integer and $(\gamma/\alpha)$ is an integer. For the

preferred embodiment, $\alpha$ = 4.75 seconds, $\beta$ = 38.0 seconds, and $\gamma$ = 19.0 seconds. The integer time ratios required for each test are then $(\beta/\alpha)$ = 8 time units and $(\gamma/\alpha)$ = 4 time units; this provides a natural system of timing in terms of time units (each unit being 4.75 seconds) which will be used below. Each chemistry can conduct a significant number of different assays, and in this example the Wet Chemistry test A can perform about 45 assays, the Wet Chemistry test B can perform about 25 assays, and the Dry Chemistry test C can perform about 60 assays. Resource sharing is possible between the various chemistry systems, e.g., one of the metering arms is shared between the Wet Chemistry A incubator, the Wet Chemistry B incubator, and the reagent supply.

At analyzer startup, the metering zone of the analyzer does not contain any input sample trays or input samples. As it would be inefficient to have the analyzer wait for the metering zone to fill to its capacity of 40 samples, the scheduling algorithm is initiated as soon as the first samples appear in the metering zone. The first step is to define the number and type of tests that will be performed on these samples. This definition could be manifested in a computer file stored either in the scheduling computer's memory or stored on an auxiliary device such as a hard disk drive. For the samples in question, the combinational clinical analyzer, either with or without the assistance of the operator, would determine the appropriate test requirements. Preferably, information on all samples would be available to the analyzer as records in the hospital's patient information system which the analyzer can selectively reference.

The Appendix contains an example of what a computer file of input patient sample information for a specific input tray might look like in computer memory. The file consists of a series of twenty records, two for each patient sample. In the first record, the patient is identified by a unique operator-assigned or hospital-assigned sequence number, first initial and last name plus another unique eight-digit number (e.g., social security number). The total number of tests for Wet Chemistry A, Wet Chemistry B, and Dry Chemistry C are represented by the next three numbers, and specific, identified tests of each type are subsequently identified by a series of test numbers, shown as two digits here. The format is such that up to seven Wet Chemistry A test numbers, four Wet Chemistry B test numbers, and six Dry Chemistry C test numbers can be contained in one record. These test numbers have a one-to-one correspondence with computer-based information specifying specific tests to be performed on the sample. In the second record, the initial patient identification information is repeated and is followed by a series of seventeen numbers representing the amount of time required to process each test specified in the previous record, respectively. The amount of time represented by the number is comprised of the individual times required for all operational steps required to complete the test including movement of the metering arm, reagent addition, incubation of the sample, and analysis readout. This test time requirement is used by the scheduling procedure to determine the optimal order in which the tests should be conducted.

During normal operation, the clinical analyzer routinely completes all tests associated with a particular set of samples in a particular input tray. To aid in the removal of trays of samples from the metering zone to the load/unloading zone, the aliquot buffer is used as an intermediate storage area for samples that are awaiting scheduling but have not yet been metered. A portion of one or more samples in a tray in the metering zone, which may have had nearly all samples and tests completed, is transferred to the aliquot buffer (the aliquot buffer also may receive samples based upon operator requests for retests and other non-routine operations). As this transfer is concluded, the completed sample tray is removed from the metering zone to the load/unloading zone, and a new tray of input patient samples is moved into the metering zone. At this point in time, up to 62 input samples, 40 in the input trays in the metering zone and 22 samples in the aliquot buffer, may be waiting to have tests performed; however, some of the input samples may have already had all of their tests completed and may be waiting for the tests on other samples in their trays to be finished. Also, depending upon the value of the sample horizon N, there may be some samples waiting to be included in the current horizon. As one or more samples may finish their testing regime at a specific point in time, up to N new samples may be added into the new samples being scheduled at any time. The usual case will be to add M < N new samples into the group being scheduled. Operationally, the analyzer software will have to update the test requirements of the samples already in progress and append the test requirements for the samples being added. The resulting new scheduling problem is then submitted to the scheduling algorithm for processing.

Another aid for the scheduling algorithm is the establishment of virtual queues to which the input patient samples are assigned automatically based upon information in the hospital's patient information system or manually by the operator. Typically there are three prioritized queues: the Wet Chemistry A queue, the Wet Chemistry B and Dry Chemistry C queue, and a Wet Chemistry B queue in this example formed from samples in the aliquot buffer.

To further aid the scheduling algorithm in finding feasible schedules, within each queue, the operator or information contained in the hospital's patient information system may optionally indicate a priority for each input patient sample or test. In particular, the following priorities are possible: STAT, which has the highest priority, softSTAT, which has the second highest priority, REFLEX, which has the third highest priority, and ROUTINE, which has the lowest priority. A predefined numerical weight can be added to the input patient sample record for use by the scheduling algorithm. For example, STAT might have a weight of 4, softSTAT might have a weight of 3, REFLEX might have a weight of 2, and ROUTINE might have a weight of 1. Within a queue and within a priority, the samples that have been in the system the longest have the highest priority.

In one embodiment, the present invention provides a methodology utilizing a first heuristic optimizing procedure to provide a test-by-test starting time schedule to process a set of input samples in a combinational clinical analyzer. The resulting starting time schedule will minimize or nearly minimize the makespan required to complete the tests. After defining the test requirements for the samples in the metering zone and assigning the tests to priority queues, the first scheduling heuristic is based upon the execution of scheduling logic for each of the three queues, i.e., the Wet Chemistry A queue, the Wet Chemistry B queue, and the Dry Chemistry C queue, at predefined time intervals. Overall, the scheduling activity is controlled by the top-level scheduler logic as shown in Fig. 4. Normally, the Wet Chemistry A schedule logic is executed every four time units (or 19 seconds) according to the logic in Fig. 5. The Wet Chemistry B is executed every one time units (or 4.75 seconds) according to the logic in Fig. 6, and the Wet Chemistry B schedule logic every eight time units (or 38 seconds) according to the logic in Fig. 6, when the aliquot buffer is not empty. The Dry Chemistry C scheduling logic is the same as the logic in Fig. 6 where all references to Wet Chem B is replaced by references to Dry Chem C and is executed every 1 time units (or 4.75 seconds). The test requirements for individual patient samples are transferred to the scheduling logic whenever the scheduling logic is executed. The sampling horizon is set at its maximum value of 62 samples and the schedule for tests from each prioritized queue are generated as follows:

Wet Chemistry A Queue: On each four (4) time unit increment, the first sample is selected from the queue, and the algorithm attempts to schedule the first test at 4 time units from the current time. If a conflict is detected, i.e., perhaps another test has been scheduled already, the algorithm attempts to schedule the test at subsequent four (4) time unit intervals into the future, until the test is successfully scheduled. This process continues until all tests in the sample are scheduled. The algorithm always attempts to schedule each test at the next 4 time unit interval from the current time. After the sample is completely scheduled, the algorithm checks for two conditions: (a) there is no test from the sample scheduled in the next four (4) time unit interval or (b) if the scheduled sample requires more then a configurable number of disposable metering tips to process (an inherent system constraint). If either condition is true, all the tests from the sample are removed from the schedule, and the next sample from the queue is attempted to be scheduled. This process continues until a sample is found with a test which can be scheduled in the next 4 time unit interval and does not require more than a configurable number of disposable metering tips to process. If the algorithm reaches the end of the prioritized queue and no sample meets both conditions, then no Wet Chemistry A sample is scheduled in the next 4 time unit interval. A flowchart of this logic is shown in Fig. 5.

Wet Chemistry B and Dry Chemistry C Queue: At each time unit (4.75 second interval), the first sample from the queue is selected and all tests from that sample are scheduled. The algorithm, as indicated by the logic in Fig. 6, will allow idle time periods as required to schedule and synchronize the tests within the sample.

Wet Chemistry B Queue: On each eight time unit interval the algorithm attempts to schedule all tests within all samples in the aliquot buffer, if it contains samples, using the same logic as applied to scheduling samples in the Wet Chemistry B and Dry Chemistry C queue. A flowchart of this equivalent logic is shown in Fig. 6.

It is important to have as many samples as possible in the metering zone and to keep samples moving through the analyzer as quickly as possible and to keep the samples in the metering zone for as long as possible to enable re-testing if required. It also is desired to minimize the number of gaps between trays and to position as many samples as possible in the metering zone. The first goal should be to maintain maximal workflow, and a secondary goal is to enable re-testing. To maintain maximal workflow, new sample trays should be indexed into the metering zone whenever possible. To enable re-testing, samples are not indexed out of the sample handler if no new work is in the load/unload area. A flow chart of sample handler rotation logic is shown in Fig. 3.

By definition, the first heuristic scheduling procedure produces an improved schedule that may provide an improved makespan, preferably the minimum makespan.

For example, Appendix A contains a representative file of patient and sample information for ten input samples that might be created and stored as an internal computer file. This files consists of twenty records, two for each patient sample. The first record contains the patient's name, an eight-digit identification number, e.g., social security number, the number of Wet Chemistry A tests, the number of Wet Chemistry B tests, and the number of Dry Chemistry C tests, a series of seven numbers indicating specific test numbers for Wet Chemistry Tests, a series of four numbers indicating specific test numbers for Wet Chemistry B tests, and six numbers indicating specific test numbers for Dry Chemistry C tests, respectively. The specific test numbers are one-to-one linked to internal computer records uniquely identifying the test to be performed. The second record repeats the patient's name and the eight-digit identification number plus has a series of seventeen numbers specifying the time requirement (in time units) for each of the previous records' Wet Chemistry A, Wet Chemistry B, and Dry Chemistry C tests. Considering only the first five patient samples, this information defines a series of 44 tests. If the same priority is assigned to all tests, the above first heuristic algorithm produces the following feasible schedule:

| Start Time | Test # | Requirements | Type |
|---|---|---|---|
| 0 | 44 | 183 | 1 |
| 3 | 43 | 460 | 1 |
| 7 | 42 | 292 | 1 |
| 11 | 41 | 292 | 1 |
| 15 | 40 | 452 | 1 |
| 22 | 39 | 118 | 2 |
| 30 | 37 | 118 | 2 |
| 38 | 38 | 118 | 2 |
| 40 | 08 | 220 | 2 |
| 46 | 06 | 126 | 2 |
| 47 | 11 | 460 | 1 |
| 54 | 23 | 118 | 2 |
| 56 | 10 | 292 | 1 |
| 59 | 07 | 220 | 1 |
| 63 | 09 | 452 | 1 |
| 70 | 30 | 118 | 2 |
| 72 | 18 | 183 | 1 |
| 75 | 21 | 460 | 1 |
| 79 | 20 | 292 | 1 |
| 86 | 31 | 118 | 2 |
| 92 | 19 | 452 | 1 |
| 102 | 36 | 126 | 2 |
| 118 | 16 | 142 | 2 |
| 128 | 25 | 183 | 1 |
| 134 | 17 | 134 | 2 |
| 140 | 24 | 220 | 1 |
| 144 | 32 | 220 | 1 |

where the makespan for the above schedule is 544 time units based upon test 19 being the last test to finish.

In another embodiment, the present invention provides a method to utilize a second heuristic optimizing procedure to produce a test-by-test starting time schedule to process a set of input samples in a combinational clinical analyzer. The resulting starting time schedule will minimize or nearly minimize the makespan required to complete the tests. This second scheduling heuristic is based upon looking at all tests for all samples that are within a predefined or operator-defined sample horizon. The first step is to define the test requirements of the samples in the sample horizon, which consists of accessing input sample records in the computer memory and organizing the data into a form suitable for transfer to the scheduling algorithm. For mathematically oriented software like the second heuristic method or mathematical programming algorithms, like linear programming, zero-one programming, or dynamic programming, a linear algebra organization in the form of vectors or matrices is usually preferred.

The information file shown in Appendix A is read into the scheduling computer and the information manipulated into an operand consisting of a matrix consisting of 44 rows (the number of tests) by 3 columns, where column 1 is the test number (from record one), column 2 is the time requirement (in time units from record two), and column 3 is an indicator variable where 1 denotes a Wet Chemistry A test, 2 denotes a Wet Chemistry B test, and 3 denotes a Dry Chemistry C test. If the sample horizon is set at 5 samples, the operand formed by the software in Appendix B for the first five patients' sample information (ten records) in Appendix A is as follows:

$$OPERAND = \begin{bmatrix} 08 & 183 & 1 \\ 11 & 460 & 1 \\ 10 & 292 & 1 \\ 07 & 220 & 1 \\ 09 & 452 & 1 \\ 06 & 118 & 2 \\ 01 & 28 & 3 \\ 04 & 69 & 3 \\ 02 & 28 & 3 \\ 05 & 66 & 3 \\ 03 & 28 & 3 \\ 18 & 183 & 1 \\ 21 & 460 & 1 \\ 20 & 292 & 1 \\ 19 & 452 & 1 \\ 16 & 142 & 2 \\ 17 & 134 & 2 \\ 13 & 66 & 3 \\ 12 & 28 & 3 \\ 15 & 69 & 3 \\ 14 & 28 & 3 \\ 25 & 183 & 1 \\ 24 & 220 & 1 \\ 22 & 28 & 3 \\ 32 & 220 & 1 \\ 31 & 118 & 2 \\ 30 & 118 & 2 \\ 29 & 66 & 3 \\ 26 & 28 & 3 \\ 27 & 69 & 3 \\ 28 & 28 & 3 \\ 44 & 183 & 1 \\ 43 & 460 & 1 \\ 42 & 292 & 1 \\ 41 & 292 & 1 \\ 40 & 452 & 1 \\ 39 & 118 & 2 \\ 37 & 118 & 2 \\ 38 & 118 & 2 \\ 36 & 126 & 2 \\ 33 & 28 & 3 \\ 34 & 69 & 3 \\ 35 & 28 & 3 \end{bmatrix}$$

where the matrix operand consists of three vectors in the software as follows:

$$OPERAND = \begin{bmatrix} testv & reqv & type \end{bmatrix}$$

After the construction of the vector comprising the operand, the Appendix B software calls the function *schedule* to transfer the operand to the second heuristic scheduling procedure and generate the associated schedule based upon assigning the earliest start times to the tests requiring the longest time. While not guaranteeing a minimum makespan, in practice, this method produces excellent schedules. Furthermore, when higher priority tests are scheduled before lower priority tests, time to first result is often minimized. The schedule is generated and returned by the scheduling software in Appendix B for type 1 (Wet Chemistry A) test and type 2 (Wet Chemistry B) tests is as follows:

Schedule for IDX (type 1) and μTip (type 2) tests

| Start Time | Test # | Requirements | Type |
| --- | --- | --- | --- |
| 0 | 11 | 460 | 1 |
| 4 | 21 | 460 | 1 |
| 8 | 43 | 460 | 1 |
| 12 | 09 | 452 | 1 |
| 16 | 19 | 452 | 1 |
| 20 | 40 | 452 | 1 |
| 24 | 10 | 292 | 1 |
| 28 | 20 | 292 | 1 |
| 32 | 42 | 292 | 1 |
| 36 | 41 | 292 | 1 |
| 40 | 07 | 220 | 1 |
| 44 | 24 | 220 | 1 |
| 48 | 32 | 220 | 1 |
| 52 | 08 | 183 | 1 |
| 56 | 18 | 183 | 1 |
| 60 | 25 | 183 | 1 |
| 64 | 44 | 183 | 1 |
| 67 | 16 | 142 | 2 |
| 75 | 17 | 134 | 2 |
| 83 | 36 | 126 | 2 |
| 91 | 06 | 118 | 2 |
| 99 | 23 | 118 | 2 |
| 107 | 31 | 118 | 2 |
| 115 | 30 | 118 | 2 |
| 123 | 39 | 118 | 2 |
| 131 | 37 | 118 | 2 |
| 139 | 38 | 118 | 2 |

This schedule completes all type 1 and type 2 tests with a makespan of 472 time units or 2,242 seconds which is optimal, i.e., the minimum makespan possible for this set of tests. Compared to the makespan of the schedule for the same samples using the first heuristic method above, this is an improvement of (544 - 472) = 72 time units or about 13%. Application of the same scheduling algorithm to the type 3 (Dry Chemistry C) tests, which is not subject to resource sharing, and hence runs unobstructed, produces a schedule as follows:

| Start Time | Test # | Requirements | Type |
| --- | --- | --- | --- |
| 0 | 04 | 69 | 3 |
| 5 | 15 | 69 | 3 |
| 10 | 27 | 69 | 3 |
| 15 | 34 | 69 | 3 |
| 20 | 05 | 66 | 3 |
| 25 | 29 | 66 | 3 |
| 30 | 01 | 28 | 3 |
| 35 | 02 | 28 | 3 |
| 40 | 03 | 28 | 3 |

(continued)

| Start Time | Test # | Requirements | Type |
|---|---|---|---|
| 45 | 13 | 28 | 3 |
| 50 | 12 | 28 | 3 |
| 55 | 14 | 28 | 3 |
| 60 | 22 | 28 | 3 |
| 65 | 26 | 28 | 3 |
| 70 | 28 | 28 | 3 |
| 75 | 33 | 28 | 3 |
| 80 | 35 | 28 | 3 |

where the makespan for the type 3 tests is only 108 time units, which is much less that the 472 time units required for the type 1 and type 2 tests.

In another embodiment, the present invention provides a method to utilize a mathematical programming procedure to produce a test-by-test starting time schedule for processing a set of input samples in a combinational clinical analyzer. Using the same methodology of defining the test requirements, transferring the test requirements to the scheduling algorithm, and subsequent generation of the schedule, this embodiment results in an optimal schedule. The resulting starting time schedule (which may not be unique, i.e., there may exist multiple schedules achieving the same, minimal makespan) will minimize the makespan required to complete the tests. The mathematical programming procedure employed is based upon a technique called implicit enumeration that is appropriate for the solution of problems formulated in a zero-one programming configuration. However, because many different formulations of the combinational clinical analyzer scheduling problem are possible, other mathematical programming methods such as linear programming, dynamic programming, branch and bound procedures among others, can be utilized to obtain optimal schedules.

The substitution of an implicit enumeration algorithm to determine a schedule for the first five patient samples of Appendix A produces the same schedule as the second heuristic scheduling procedure above.

The scheduling method according to the present invention can be implemented by a computer program, having computer readable program code, interfacing with the computer controller of the analyzer as is known in the art. The scheduling method can also be incorporated in an article of manufacture that includes a computer usable medium having computer readable program code configured to conduct the method of the present invention. The computer usable medium can include such known mediums such as an optical disk, or a hard drive.

It will be apparent to those skilled in the art that various modifications and variations can be made to the methods and processes of this invention. Thus, it is intended that the present invention cover such modifications and variations, provided they come within the scope of the appended claims and their equivalents.

## APPENDIX A

Input test requirements file:

| John Smith | 123-45-6789 5 1 5 | 08 | 11 | 10 | 07 | 09 | 00 | 00 | 06 | 00 | 00 | 00 | 01 | 04 | 02 | 05 | 03 | 00 |
|---|---|---|---|---|---|---|---|---|---|---|---|---|---|---|---|---|---|---|
| John Smith | 123-45-6789 5 1 5 | 183 | 460 | 292 | 220 | 452 | 0 | 0 | 118 | 0 | 0 | 0 | 28 | 69 | 28 | 66 | 28 | 0 |
| Joe Friday | 234-56-7890 4 2 4 | 18 | 21 | 20 | 19 | 00 | 00 | 00 | 16 | 17 | 00 | 00 | 13 | 12 | 15 | 14 | 00 | 00 |
| Joe Friday | 234-56-7890 4 2 4 | 183 | 460 | 292 | 452 | 0 | 0 | 0 | 142 | 134 | 0 | 0 | 66 | 28 | 69 | 28 | 0 | 0 |
| Fred Flintstone | 345-67-8901 1 1 2 | 25 | 24 | 00 | 00 | 00 | 00 | 00 | 23 | 00 | 00 | 00 | 22 | 00 | 00 | 00 | 00 | 00 |
| Fred Flintstone | 345-67-8901 1 1 2 | 183 | 220 | 0 | 0 | 0 | 0 | 0 | 118 | 0 | 0 | 0 | 28 | 0 | 0 | 0 | 0 | 0 |
| Wilma Flintstone | 456-78-9012 4 2 1 | 32 | 00 | 00 | 00 | 00 | 00 | 00 | 31 | 30 | 00 | 00 | 29 | 26 | 27 | 28 | 00 | 00 |
| Wilma Flintstone | 456-78-9012 4 2 1 | 220 | 0 | 0 | 0 | 0 | 0 | 0 | 118 | 118 | 0 | 0 | 66 | 28 | 69 | 28 | 0 | 0 |
| Lash LaRue | 567-89-0123 3 4 5 | 44 | 43 | 42 | 41 | 40 | 00 | 00 | 39 | 37 | 38 | 36 | 33 | 34 | 35 | 00 | 00 | 00 |
| Lash LaRue | 567-89-0123 3 4 5 | 183 | 460 | 292 | 292 | 452 | 0 | 0 | 118 | 118 | 118 | 126 | 28 | 69 | 28 | 0 | 0 | 0 |
| Gene Autry | 678-90-1234 2 4 2 | 45 | 46 | 00 | 00 | 00 | 00 | 00 | 47 | 48 | 49 | 50 | 51 | 52 | 00 | 00 | 00 | 00 |
| Gene Autry | 678-90-1234 2 4 2 | 183 | 460 | 0 | 0 | 0 | 0 | 0 | 118 | 118 | 118 | 118 | 28 | 69 | 0 | 0 | 0 | 0 |
| Roy Rogers | 789-01-2345 6 1 6 | 53 | 54 | 55 | 56 | 57 | 58 | 00 | 59 | 00 | 00 | 00 | 60 | 61 | 62 | 63 | 64 | 65 |
| Roy Rogers | 789-01-2345 6 1 6 | 183 | 460 | 292 | 292 | 452 | 292 | 0 | 118 | 0 | 0 | 0 | 28 | 69 | 28 | 69 | 69 | 69 |
| Dale Evans | 890-12-3456 4 2 4 | 66 | 67 | 68 | 69 | 00 | 00 | 00 | 70 | 71 | 00 | 00 | 72 | 73 | 74 | 75 | 00 | 00 |
| Dale Evans | 890-12-3456 4 2 4 | 183 | 460 | 292 | 292 | 0 | 0 | 0 | 118 | 118 | 0 | 0 | 28 | 69 | 28 | 28 | 0 | 0 |
| Hopalong Cassidy | 901-23-4567 7 1 6 | 76 | 77 | 78 | 79 | 80 | 81 | 82 | 83 | 00 | 00 | 00 | 84 | 85 | 86 | 87 | 88 | 89 |
| Hopalong Cassidy | 901-23-4567 7 1 6 | 183 | 460 | 292 | 452 | 292 | 292 | 292 | 142 | 0 | 0 | 0 | 66 | 28 | 69 | 28 | 28 | 28 |
| Sky King | 012-34-5678 1 4 1 | 90 | 00 | 00 | 00 | 00 | 00 | 00 | 91 | 92 | 93 | 94 | 95 | 00 | 00 | 00 | 00 | 00 |
| Sky King | 012-34-5678 1 4 1 | 183 | 0 | 0 | 0 | 0 | 0 | 0 | 142 | 134 | 134 | 134 | 66 | 0 | 0 | 0 | 0 | 0 |

EP 1 881 329 A2

APPENDIX B

Scheduler software:

```
#
function schedule(horizon,testv,reqv,type,k,kmax,timesch,testsch,reqsch,typesch){
#
#       this subroutine is the scheduling algorithm - longest tests first.
#
        for (i=1;i<=k;i++)
        {
        maxreq          = 0
        maxindex        = 0
        for (j=1;j<=kmax;j++)
                {
                if (reqv[j] > maxreq)
                        {
                        maxreq   = reqv[j]
                        maxindex = j
                        }
                }
        if (i==1)
                {
                starttime       = 0
                timesch[i]      = starttime
                testsch[i]      = testv[maxindex]
                reqsch[i]       = reqv[maxindex]
                typesch[i]      = type[maxindex]
                reqv[maxindex]  = 0
                }
        else                                    # need to determine the delay based on type.
                {
                testsch[i]      = testv[maxindex]
                reqsch[i]       = reqv[maxindex]
                typesch[i]      = type[maxindex]
                if ((typesch[i-1] == 1) && (typesch[i] == 1)) delay = 4
                if ((typesch[i-1] == 1) && (typesch[i] == 2)) delay = 3
                if ((typesch[i-1] == 2) && (typesch[i] == 1)) delay = 5
                if ((typesch[i-1] == 2) && (typesch[i] == 2)) delay = 8
                timesch[i]      = starttime + delay
                starttime       = timesch[i]
                reqv[maxindex]  = 0
                }
        }
}

BEGIN {                                 # this is the operand set up section.
#
#       horizon is the number of samples for tests to be scheduled.
#
        horizon = 5
        maxtests= 17
        idxmax  = 7
        utipmax = 12

        odd     = 1                     # first record to be processed is odd.
        even    = 0
```

```
m       = 1                              # counter for odd-even records.
}
#
#
#       MAIN section accesses the input file and defines the test requirements.
#
{

#       process even vs odd records differently.

if(NR <= 2*horizon)                      # two records per sample.
{

if (odd == 1)                            # input patient and test information.
    {
        test[m,1]       = $7
        test[m,2]       = $8
        test[m,3]       = $9
        test[m,4]       = $10
        test[m,5]       = $11
        test[m,6]       = $12
        test[m,7]       = $13
        test[m,8]       = $14
        test[m,9]       = $15
        test[m,10]      = $16
        test[m,11]      = $17
        test[m,12]      = $18
        test[m,13]      = $19
        test[m,14]      = $20
        test[m,15]      = $21
        test[m,16]      = $22
        test[m,17]      = $23

        odd     = 0
        even    = 1
        next                             # go on to the next input record
    }

if      (even == 1)                      # input requirements information.
        {
        req[m,1]        = $7
        req[m,2]        = $8
        req[m,3]        = $9
        req[m,4]        = $10
        req[m,5]        = $11
        req[m,6]        = $12
        req[m,7]        = $13
        req[m,8]        = $14
        req[m,9]        = $15
        req[m,10]       = $16
        req[m,11]       = $17
        req[m,12]       = $18
        req[m,13]       = $19
        req[m,14]       = $20
        req[m,15]       = $21
        req[m,16]       = $22
        req[m,17]       = $23

        odd     = 1
        even    = 0
        m++
```

20

```
                    }
            }
    }
    #
    #       This section transfers the requirements to the scheduling algorithms.
    #
    END     {

            k        = 1
            for (i=1;i<=horizon;i++)
                    {
                    for (j=1;j<=maxtests;j++)
                            {
                            if (test[i,j] > 0)
                                    {
                                    testv[k]  = test[i,j]
                                    reqv[k]   = req[i,j]

                                    type[k]   = 2            #       uTip type test (by default).
                            if (j <= idxmax)
                                    {
                                    type[k]   = 1            #       IDX type test.
                                    }
                            if (j >= utipmax)
                                    {
                                    type[k]   = 3            #       uSlide type test.
                                    }
                            k++
                                    }
                            }
                    }
    #
    #       find the number of type 1 & type 2 tests.
    #
            k        = k -1
            kmax     = k
            type12count      = 0
            for (i=1;i<=k;i++)
                    {
                    if (type[i] != 3)
                            {
                            type12count++
                            }
                    }
            k = type12count

    #       transfer the requirements info to the scheduling procedure.
    #
    #       operand = [ testv reqv type ]
    #

            schedule(horizon,testv,reqv,type,k,kmax,timesch,testsch,reqsch,typesch)

    #
    #       The algorithm schedule returns the computed heuristic schedule in the vectors:
    #               timesch, testsch, reqsch, typesch.
    #
            print "\n"
            print "Schedule for IDX and uTip tests"
            print "\n"
```

```
print "Start Time         Test #          Requirements    Type"
for (i=1;i<=k;i++)
                {
                print " ", timesch[i]," ", testsch[i], "   ", reqsch[i], "   ", typesch[i]
                }
    }
```

**Claims**

1. A method for scheduling the order of analysis of multiple samples in a combinational clinical analyzer performing a plurality of different analytical tests, comprising the steps of:

   loading multiple samples in random order into a combinational clinical analyzer;
   defining the test requirements of the multiple samples;
   transferring said test requirements to a flexible scheduling algorithm; and
   generating a schedule specifying the start times of each required test for each of said multiple samples that minimizes or maximizes a predefined objective function.

2. The method as defined in claim 1, wherein the objective function is the makespan.

3. The method as defined in claim 1, wherein the objective function is the weighted makespan.

4. A method for minimizing sample testing time in a combination clinical analyzer performing a plurality of different analytical tests, comprising the steps of:

   defining the test requirements of one or more input samples;
   transferring said test requirements to a flexible scheduling algorithm; and
   generating a schedule specifying the start times of each required test for each of said input samples that minimizes or maximizes a predefined objective function.

5. A method for scheduling the order of analysis of multiple samples in a combinational clinical analyzer performing a plurality of different analytical tests, comprising the steps of:

   loading multiple samples in random order into a combinational clinical analyzer;
   defining the test requirements of the multiple samples;
   transferring said test requirements to a flexible scheduling algorithm;
   generating a schedule specifying the start times of each required test for each of said multiple samples that minimizes or maximizes a predefined objective function;
   loading additional multiple samples in random order into the analyzer;
   defining the test requirements of the additional multiple samples;
   appending the test requirements of the additional multiple samples to the test requirements of the multiple samples already in the analyzer producing updated an updated schedule specifying the start times of each required test for each of the multiple samples and additional multiple samples that minimizes or maximizes a predefined objective function.

6. The method as defined in claim 5, wherein the objective function is the time from when the first test starts until the last test ends.

7. The method as defined in claim 6, wherein the objective function is the sum of the time from when each test starts until each test ends.

8. The method as defined in any one of claims 1 to 7, wherein the clinical analyzer has a plurality of virtual sample queues for organizing incoming patient samples and tests.

9. The method as defined in any one of claims 1 to 8, wherein the multiple samples to the clinical analyzer are given relative priorities to assist in the scheduling operation wherein a priority of STAT is the highest priority, softSTAT has the second highest priority, REFLEX has the third highest priority, and ROUTINE has the lowest priority.

10. The method as defined in any one of claims 1 to 9, wherein the flexible schedule algorithm employs a first heuristic procedure to generate a schedule.

11. The method as defined in claim 10, wherein the flexible schedule algorithm employs a second heuristic procedure to generate a schedule.

12. The method as defined in any one of claims 1 to 11, wherein the flexible schedule algorithm employs a mathematical programming procedure to generate a schedule.

13. The method as defined in claim 12, wherein the mathematical programming procedure is linear programming, zero-one programming, dynamic programming or a variation thereof using explicit enumeration, implicit enumeration or branch-and-bound as solution techniques.

14. The method of any one of claims 1 to 13, wherein the number of input samples considered by the scheduling algorithm is predetermined.

15. The method of any one of claims 1 to 13, wherein the number of input samples considered by the scheduling algorithm is determined in real-time by operational parameters.

16. A combinational clinical analyzer including receiving elements, set up to operate according to the method of any one of claims 1 to 15.

17. The analyzer as defined in claim 16, wherein the clinical analyzer has a two-dimensional metering zone including means for accessing patient samples at any point in said zone.

18. The analyzer as claimed in claim 15 or claim 16, wherein the receiving elements are one or more of a dry slide element, an optically transparent cuvette or a streptavidin coated microwell.

19. The analyzer as defined in claim18, wherein the clinical analyzer utilizes thin-film slides.

20. The analyzer as defined in claim 18, wherein the clinical analyzer utilizes cuvettes or cup-shaped microwells as reaction vessels.

21. The analyzer as defined in any one of claims 16 to 20, wherein the clinical analyzer has a plurality of sensiometric devices comprising electrometers, reflectometers, luminometers, light transmissivity meters or photometers for measuring samples.

22. The analyzer as defined in any one of claims 16 to 21, wherein the clinical analyzer utilizes reagents.

23. The analyzer as defined in claim 23, wherein the clinical analyzer has a plurality of reagent delivery subsystems.

24. The analyzer as defined in any one of claims 16 to 23, wherein the clinical analyzer has a plurality of aliquot buffers used to temporarily store samples in the metering zone.

25. A method of determining the presence or amount of different analytes in multiple samples in a combinational clinical analyzer, comprising the steps of:

   providing a combinational clinical analyzer as claimed in any one of claims 16 to 24;
   dispensing samples on receiving elements in the order determined by the scheduling method;
   optionally providing one or more reagents;
   incubating the receiving elements; and
   taking measurement of the samples to determine the presence or amount of the different analytes in each of the multiple samples.

# Fig. 1

101

102

# FIG. 2

# FIG. 3

## Sample Handler Logic Diagram

Start — 301

Tray at Exit Station completed all tests? — 302

Add new sample information to prioritized queues — 308

Move tray into metering area — 307

Tray at Load Station with new work? — 303

Move completed trays to Load/ Unload area — 306

Tray in Load /Unload area requiring reflex? — 304

All trays in metering area have all tests completed? — 305

# FIG. 4

**Top Level Scheduler Logic**

Start — *401*

Have 4 time units elapsed? — *402*

Wait 1 time unit — *414*

Wet Chem B test scheduled > 0? — *403*

Run Wet Chem A test scheduler — *404*

Run Wet Chem B test scheduler — *405*

Wet Chem B tests sched < Limit or no Wet Chem A tests available? — *406*

Wet Chem B test sched > Limit or Aliqouit Buffer empty? — *407*

Run Wet Chem B test scheduler — *409*

Run Wet Chem A test scheduler — *408*

Have 8 time units elapsed? — *410*

Run Wet Chem A test scheduler — *411*

Is µSlide arm idle or will be in next time unit? — *412*

Schedule next sample in Wet Chem B - Dry Chem C queue — *413*

# FIG. 5

## Wet Chem A Sample Scheduling

Start **501**

Get next sample from Wet Chem A queue **502**

Schedule sample **503**

**508**
Remove sample from schedule

——No——

**504**
Is test from sample scheduled in 8 time units and tip drops < Limit?

——Yes——

**505**
Decrement Wet Chem B test scheduled by number of Wet Chem A tests scheduled * mix factor

**509**
All samples in queue attempted to schedule

No

**507**
Wet Chem B tests scheduled = 10

——Yes——

**506**
Wet Chem B tests scheduled < 10

Yes

**510**
Return ◄——No——

28

# FIG. 6

## Wet Chem B Sample Scheduling

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5087423 A
- US 5380488 A
- US 5434083 A
- US 5482861 A
- US 5575976 A
- US 5576215 A
- US 5646049 A
- US 5679309 A
- US 5846491 A
- US 5902549 A
- US 5966309 A
- US 5972295 A
- US 5985672 A
- US 6019945 A
- US 6022746 A

- US 6096561 A
- US 6117392 A
- US 6261521 A
- US 7015042 A
- US 7101715 A
- US 20030040117 A
- US 2003054557 A
- US 20040053414 A
- US 20050220670 A
- US 20050227360 A
- WO 2004074847 A
- WO 2005006831 A
- WO 2005008217 A
- US 3992158 A, Przybylowicz

**Non-patent literature cited in the description**

- **HARVEY M. WAGNER.** Principles of Operations Research. Prentice-Hall, 1975